# EUROPEAN PATENT SPECIFICATION

(11) **EP 4 006 091 B1**
(45) Date of publication and mention of the grant of the patent: **30.10.2024**
(21) Application number: 20846218.4
(22) Date of filing: 29.07.2020
(51) Int. Cl.: C08K 5/11, C08K 5/00, C08L 101/00

(54) **CITRATE-BASED PLASTICIZER COMPOSITION AND RESIN COMPOSITION COMPRISING SAME**
CITRATBASIERTE WEICHMACHERZUSAMMENSETZUNG UND HARZZUSAMMENSETZUNG DAMIT
COMPOSITION DE PLASTIFIANT À BASE DE CITRATE ET COMPOSITION DE RÉSINE LA COMPRENANT

(30) Priority: 30.07.2019 KR 20190092609
(43) Date of publication of application: 01.06.2022
(73) Proprietor: LG CHEM, LTD., Yeongdeungpo-gu, Seoul 07336 (KR)
(72) Inventor: KIM, Hyun Kyu, Daejeon 34122 (KR); JEONG, Seok Ho, Daejeon 34122 (KR); MOON, Jeong Ju, Daejeon 34122 (KR); CHOI, Woo Hyuk, Daejeon 34122 (KR); CHO, Yun Ki, Daejeon 34122 (KR); KIM, Joo Ho, Daejeon 34122 (KR)
(74) Representative: Goddar, Heinz J.
(86) International application number: PCT/KR2020/010004
(87) International publication number: WO 2021/020878

(56) References cited:
- EP-A1- 3 130 631
- EP-A1- 3 255 086
- EP-A1- 3 476 890
- EP-A2- 1 256 566
- CN-A- 103 113 617
- DE-A1- 102008 002 168
- KR-A- 20020 085 812
- KR-A- 20090 087 733
- KR-A- 20160 095 875
- KR-A- 20170 020 282
- KR-A- 20180 039 305
- KR-B1- 101 952 338
- US-A- 4 883 905
- DATABASE CA [online] CHEMICAL ABSTRACTS SERVICE, COLUMBUS, OHIO, US; 24 April 2018 (2018-04-24), SON, JONG SEOK ET AL: "Citric acid ester plasticizer for polyvinyl chloride floor covering", XP002807165, retrieved from STN Database accession no. 2018:806377
- DATABASE CA [online] CHEMICAL ABSTRACTS SERVICE, COLUMBUS, OHIO, US; 24 August 2009 (2009-08-24), YANG, SE IN ET AL: "Citric ester based plasticizer compositions for polyvinyl chloride resins with good heat resistance, transparency, adhesion, elongation, and tensile strength", XP002807166, retrieved from STN Database accession no. 2009:1022737

## Description

### TECHNICAL FIELD

The present invention relates to a citrate-based plasticizer composition including citrates in which the carbon numbers of the alkyl radicals of components in the composition are the same, and a resin composition including the same.

### BACKGROUND ART

Generally, plasticizers are obtained through the reaction of alcohols with polycarboxylic acids such as phthalic acid and adipic acid to form corresponding esters. In addition, considering the internal and external regulations on harmful phthalate-based plasticizers to the human body, studies are being continued on plasticizer compositions which can replace phthalate-based plasticizers such as terephthalate-based, adipate-based and other polymer-based plasticizers.

Meanwhile, regardless of the type of industry including plastisol type of industry of flooring materials, wallpaper, soft and hard sheets, etc., calendaring type of industry, extrusion/injection compound type of industry, the demand for eco-friendly products is increasing. In order to reinforce the quality properties, processability and productivity by the finished products, an appropriate plasticizer is required considering discoloration, migration, mechanical properties, etc.

According to the properties required by the types of industry in various areas of usage, such as tensile strength, elongation rate, light resistance, migration, gelling properties and absorption rate, supplementary materials such as a plasticizer, a filler, a stabilizer, a viscosity decreasing agent, a dispersant, a defoaming agent and a foaming agent are mixed with a PVC resin.

For example, in case of applying di(2-ethylhexyl) terephthalate (DEHTP) which is relatively cheap and widely used among plasticizer compositions which can be applied to PVC, hardness or sol viscosity is high, absorption rate of a plasticizer is relatively slow, and migration and stress migration are not good.

As improvements on the above limitations, the application of a transesterification product with butanol as a plasticizer, as a composition including DEHTP can be considered. In this case, plasticization efficiency is improved but volatile loss or thermal stability is inferior and mechanical properties are somewhat degraded, and the improvement of physical properties is required. Accordingly, generally, there is no solution but employing a method compensating the defects through mixing with a second plasticizer at the present time.

However, in case of applying the second plasticizer, there are drawbacks of generating unexpected defects as follows: the change of the physical properties is hard to predict, the application can become a factor of increasing the unit cost of the product, the improvement of the physical properties is not clearly shown except for specific cases, and problems relating to compatibility with a resin can arise.

In addition, if a material like tri(2-ethylhexyl) trimellitate or triisononyl trimellitate is applied as a trimellitate-based product in order to improve the inferior migration and loss properties of the DEHTP products, migration or loss properties can be improved, but plasticization efficiency can be degraded, and a great deal of the material is required to be injected to provide a resin with suitable plasticization effect, and considering relatively the high unit price of the products, commercialization thereof is impossible.

Accordingly, the development of products for solving the environmental issues of the conventional phthalate-based products or products for improving inferior physical properties of the eco-friendly products for improving the environmental issues of the phthalate-based products is required.
KR 2018 0039305 discloses mixed citric acid esters with C₁-C₈ alcohols used as plasticizers for PVC. A mixed ester using different C₆-alcohols is not disclosed.
KR 2009 0087733 A discloses mixed citric acid esters with C₄-C₁₀ alcohols used as plasticizers for PVC. A mixed ester using different C₆-alcohols is not disclosed.
DE 10 2008 002168 A1 discloses citric acid esters with C₅-C₈-alcohols disclosing a branching degree of the C₈-alcohol as being 0.9-2.2.
EP 3 255 086 A1 discloses PVC plasticizers made of C₂-C₈ esters of citric acid, focusing on C₄ and C₈ alcohols.
EP 1 256 566 A2 discloses the use of butyl based mixed citric acid esters.
US 4 883 905 A discloses tri-n-hexyl citrate which may be used as plasticizer for PVC.
EP 3 130 631 A1 discloses a PVC composition with a mixed C₄-C₈-alkyl citrate based plasticizer.
EP 3 476 890 A1 discloses the use of an additional plasticizer based on a C₅ to C₉-alkyl citrate.

### DISCLOSURE OF THE INVENTION

### TECHNICAL PROBLEM

An object of the present invention is to provide a plasticizer composition which includes citrates in which isomeric radicals having the same carbon number of alkyl radicals of components are combined, and a plasticizer composition maintaining mechanical properties and stress resistance to equal or better levels than the conventional plasticizer and at the same time, markedly improving light resistance while having suitable balance between migration properties and loss properties with plasticizer efficiency.

### TECHNICAL SOLUTION

To solve the tasks, according to an embodiment of the present invention, there is provided a citrate-based plasticizer composition according to claim 1 including a citrate-based composition including one or more citrates of Formula 1 below, wherein an alkyl group of the citrate is derived from an isomer mixture of hexyl alcohol having a degree of branching of 2.0 or less.

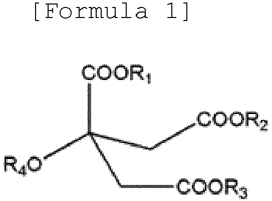

In Formula 1, R₁ to R₃ are each independently an n-hexyl group, a branched hexyl group or a cyclopentylmethyl group, and R₄ is hydrogen or an acetyl group.

In order to solve the tasks, according to another embodiment of the present invention, there is provided a resin composition including 100 parts by weight of a resin, and 5 to 150 parts by weight of the plasticizer composition.

The resin can be one or more selected from the group consisting of a straight vinyl chloride polymer, a paste vinyl chloride polymer, an ethylene vinyl acetate copolymer, an ethylene polymer, a propylene polymer, polyketone, polystyrene, polyurethane, natural rubber and synthetic rubber.

Further embodiments are disclosed in the dependent claims.

### ADVANTAGEOUS EFFECTS

The plasticizer composition according to an embodiment of the present invention, if used in a resin composition, can maintain and improve mechanical properties and stress resistance to equal or better levels when compared with the conventional plasticizer, and at the same time, markedly improve light resistance can be achieved while having suitable balance between migration properties and loss properties with plasticization efficiency.

### MODE FOR CARRYING OUT THE INVENTION

It will be understood that terms or words used in the present disclosure and claims should not be interpreted as having a meaning that is defined in common or in dictionaries, however should be interpreted in consistent with the technical scope of the present invention based on the principle that inventors can appropriately define the concept of the terms to explain the invention at his best method.

### Definition of terms

The term "composition" as used in the present disclosure includes a mixture of materials including the corresponding composition as well as a reaction product and a decomposition product formed from the materials of the corresponding composition.

The term "straight vinyl chloride polymer" as used in the present disclosure can be one type of vinyl chloride polymers and polymerized by suspension polymerization, bulk polymerization, etc., and can refer to a polymer having a porous particle shape in which a large number of pores are dispersed, having a size of tens to hundreds of micrometers, no cohesiveness, and excellent flowability.

The term "paste vinyl chloride polymer" as used in the present disclosure can be one type of vinyl chloride polymers and polymerized by microsuspension polymerization, microseed polymerization, emulsion polymerization, etc., and can refer to a polymer having minute particles without pores and a size of tens to thousands of nanometers, cohesiveness, and inferior flowability.

The terms "comprising", and "having" and the derivatives thereof in the present invention, though these terms are particularly disclosed or not, do not intended to preclude the presence of optional additional components, steps, or processes. In order to avoid any uncertainty, all compositions claimed by using the term "comprising" can include optional additional additives, auxiliaries, or compounds, including a polymer or any other materials, unless otherwise described to the contrary. In contrast, the term "consisting essentially of ∼" excludes unnecessary ones for operation and precludes optional other components, steps or processes from the scope of optional continuous description. The term "consisting of ∼" precludes optional components, steps or processes, which are not particularly described or illustrated.

### Measurement methods

In the present disclosure, the content analysis of the components in a composition is conducted by gas chromatography measurement using a gas chromatography equipment of Agilent Co. (product name: Agilent 7890 GC, column: HP-5, carrier gas: helium (flow rate of 2.4 ml/min), detector: F.I.D., injection volume: 1 µl, initial value: 70°C/4.2 min, end value: 280°C/7.8 min, program rate: 15°C/min).

In the present disclosure, "hardness" means Shore hardness (Shore "A" and/or Shore "D") at 25°C and is measured in conditions of 3T 10s using ASTM D2240. The hardness can be an index for evaluating plasticization efficiency, and the lower the value is, the better the plasticization efficiency is.

In the present disclosure, "tensile strength" is obtained according to an ASTM D638 method by drawing a specimen in a cross head speed of 200 mm/min (1T) using a test apparatus of U.T.M (manufacturer: Instron, model name: 4466), measuring a point where the specimen is cut, and calculating according to the following Mathematical Formula 1: Tensile strength (kgf/cm2) = load value (kgf)/thickness (cm) x width (cm)

In the present disclosure, "elongation rate" is obtained according to an ASTM D638 method by drawing a specimen in a cross head speed of 200 mm/min (1T) using the U.T.M, measuring a point where the specimen is cut, and calculating according to the following Mathematical Formula 2: Elongation rate (%) = length after elongation/initial length x 100

In the present disclosure, "migration loss" is obtained according to KSM-3156, by which a specimen with a thickness of 2 mm or more is obtained, glass plates are attached onto both sides of the specimen and a load of 1 kgf/cm² is applied. The specimen is stood in a hot air circulation type oven (80°C) for 72 hours, then taken out therefrom and cooled at room temperature for 4 hours. Then, the glass plates attached onto both sides of the specimen are removed, the weights before and after standing a glass plate and a specimen plate in the oven are measured, and the migration loss is calculated according to Mathematical Formula 3 below. Migration loss (%) = {[weight of initial specimen) - (weight of specimen after standing in oven)]/(weight of initial specimen)} x 100

In the present disclosure, "volatile loss" is obtained by processing a specimen at 80°C for 72 hours and then, measuring the weight of the specimen. Volatile loss (wt%) = {[weight of initial specimen) - (weight of specimen after processing)]/(weight of initial specimen)} x 100

In case of the various measurement conditions, the details of the conditions of the temperature, the speed of revolution, the time, etc., can be somewhat changed according to situations, and if the conditions are different, a measurement method and its conditions are required to be separately indicated.

Hereinafter, the present invention will be explained in more detail to assist the understanding of the present invention.

According to an embodiment of the present invention, a plasticizer composition includes a citrate-based composition including one or more citrates of Formula 1 below, wherein the alkyl group of the citrate is derived from an isomer mixture of hexyl alcohol having a degree of branching of 2.0 or less.

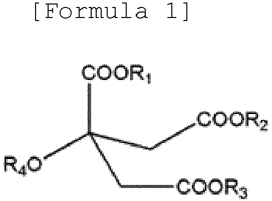

In Formula 1, R₁ to R₃ are each independently an n-hexyl group, a branched hexyl group or a cyclopentylmethyl group, and R₄ is hydrogen or an acetyl group.

According to the present invention, the isomer mixture of the hexyl alcohol of the plasticizer composition includes two or more selected from the group consisting of 1-hexanol, 1-methylpentanol, 2-methylpentanol, 3-methylpentanol, 4-methylpentanol, 1,1-dimethylbutanol, 1,2-dimethylbutanol, 1,3-dimethylbutanol, 2,2-dimethylbutanol, 2,3-dimethylbutanol, 3,3-dimethylbutanol, 1-ethylbutanol, 2-ethylbutanol, 3-ethylbutanol and cyclopentylmethanol.

According to the alcohol included in such a hexyl alcohol isomer, the alkyl groups of R₁ to R₃ of Formula 1 can be determined, and in a final composition, diverse compositions in which three, two or one of the isomer alkyl groups of hexyl alcohol are bonded to three alkyl groups, can be included, and the ratio of components in the final composition can be determined by the component ratio of alcohols reacted.

As described above, in case of using an alcohol having 6 carbon atoms in the application of the citrate-based plasticizer, when compared with a case using less than 6 carbon atoms, an absorption rate of a suitable degree can be secured, processability improvement can be achieved, and tensile strength, elongation rate and volatile loss can be markedly improved, and when compared with a case using greater than 6 carbon atoms, plasticization efficiency can be excellent, and large migration resistance and stress resistance can be expected.

The isomer mixture of hexyl alcohol of the plasticizer composition according to the present invention has the degree of branching of 2.0 or less, preferably, 1.5 or less. Particularly, the degree of branching can be 1.5 or less, 1.3 or less, more preferably, 1.1 or less. In addition, the degree of branching can be 0.1 or more, 0.2 or more, 0.3 or more, most preferably, 0.7 or more. The degree of branching of the isomer mixture of hexyl alcohol can be maintained even though transformed into a citrate-based plasticizer composition. If the degree of branching is greater than 2.0, balance between physical properties can be broken, defects of falling short of one or more evaluation standards of a product can be generated, but in a preferred range of 1.5 or less, the improvement of migration loss and volatile loss as well as mechanical properties can be even further optimized, and balance between physical properties can be excellent.

Here, the degree of branching can mean that how many branched carbons of the alkyl groups combined with a material included in a composition are, and can be determined according to the weight ratio of a corresponding material. For example, if an alcohol mixture is assumed to include 60 wt% of n-hexyl alcohol, 30 wt% of methylpentyl alcohol, and 10 wt% of ethylbutyl alcohol, the number of branched carbons of each alcohol is 0, 1 and 2, respectively, and the degree of branching can be calculated by [(60×0)+(30×1)+(10×2)]/100 to give 0.5. Here, the number of branched carbons of cyclopentylmethanol is regarded as 0.

The plasticizer composition according to an embodiment of the present invention can include 1-hexanol, 2-methylpentanol and 3-methylpentanol in the isomer mixture of hexyl alcohol. By including 2-methylpentanol and 3-methylpentanol together, balance between physical properties can be maintained, and excellent effects in view of volatile loss can be obtained.

A branched hexyl alcohol including 2-methylpentanol and 3-methylpentanol can be included in 40 parts by weight or more, 50 parts by weight or more, 60 parts by weight or more, preferably, 65 parts by weight or more, 70 parts by weight or more with respect to 100 parts by weight of the isomer mixture. To the maximum, all can be the branched, and can be included in 99 parts by weight or less, 98 parts by weight or less, preferably, 95 parts by weight or less, or 90 parts by weight or less. If the branched hexyl alcohol is included in the range, the improvement of mechanical properties can be expected.

In addition, the linear alcohol of 1-hexanol can be included in 50 parts by weight or less, 40 parts by weight or less, preferably, 30 parts by weight or less with respect to 100 parts by weight of the isomer mixture. The 1-hexanol may not be present in components but can be included in at least 2 parts by weight or more, and in this case, advantages of maintaining balance between physical properties and improving mechanical properties can be obtained. Linear alcohols are known to show theoretically excellent effects, but in the present invention, different results from the theoretical results were obtained, and it was confirmed that even better balance between physical properties was obtained in a case of applying an isomer mixture including a branched alcohol.

The plasticizer composition according to an embodiment of the present invention can include 1-hexanol, 2-methylpentanol, 3-methylpentanol and cyclopentylmethanol in the isomer mixture of hexyl alcohol. Preferably, by further including cyclopentylmethanol, volatile loss can be further improved while maintaining balance between physical properties.

In this case, the cyclopentylmethanol can be 20 parts by weight or less, preferably, 15 parts by weight or less, more preferably, 10 parts by weight or less, or may not be present with respect to 100 parts by weight of the isomer mixture, or at minimum 2 parts by weight to obtain effects thereby.

Particularly, through what degree of the ratio of the branched alkyl groups among total alkyl radicals is present in a final composition, and further, through what ratio of a specific branch alkyl radical is present among branched alkyl groups, balance between plasticization efficiency and physical properties of migration/loss properties can be controlled, mechanical properties such as tensile strength and elongation rat 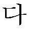 , and stress resistance can be maintained to equal or better levels, and remarkable improvement of light resistance can be achieved due to the interaction of four types of cyclohexane triesters included in a composition, and these can be accomplished by the components and the component ratio of the above-described isomers of hexyl alcohol.

Through this, products with further improved loss properties can be accomplished while removing environmental issues of the conventional phthalate-based products, the migration and loss properties of the conventional terephthalate-based products can be markedly improved, and products with significantly improved light resistance when compared with the commercially available conventional products can be accomplished.

According to present invention, as a citrate included in the citrate-based plasticizer composition, R₄ of Formula 1 is hydrogen or an acetyl group. If R₄ is hydrogen, generally, excellent effects can be achieved regarding plasticization efficiency, migration resistance and light resistance, and absorption rate can be maintained well to an appropriate level and evaluated as excellent. However, in view of thermal properties, relatively inferior results are shown in contrast to the improvement of other physical properties, but this can be supplemented through the control of processing conditions for preventing thermal discoloration during processing.

As another supplement, the application of a citrate in which an acetyl group is combined as R₄ can be considered. In this case, the thermal properties of the citrate can be improved and thermal resistance can be reinforced, and accordingly, discoloration and carbonization properties can be improved, and advantages of relatively free from thermal influence during processing or in complete products can be achieved. Further, by the improvement of thermal properties, volatile loss, tensile strength after exposure to high temperature and the retention ratio of elongation rate (residual rate) can be excellent.

However, in case of bonding an acetyl group to the citrate, due to the increase of molecular weight and steric hindrance effects according to structural change, a slight deterioration of plasticization efficiency, mechanical properties, migration resistance and absorption rate can arise.

Accordingly, according to the materials compounded in sheet prescription, compound prescription, etc., the usage applied, the method applied for melt processing, whether processing conditions are controlled, or whether the structural change of R₄ is applied, can be suitably selected, and there are advantages in the application in very diverse ranges.

According to an embodiment of the present invention, in case where the absorption rate of di(2-ethylhexyl) terephthalate is from 6 minutes and 55 seconds to 7 minutes and 5 seconds, the plasticizer composition can have an absorption rate of 4 minutes and 30 seconds to 6 minutes and 50 seconds, and the absorption rate can be the measurement of time consumed for mixing a resin and an ester compound using a planatary mixer (Brabender, P600) at 77°C under 60 rpm conditions until the torque of the mixer becomes a stabilized state.

The absorption rate in the above-described range is time for a plasticizer absorbed into a resin, and if the absorption rate is too short, the plasticizer can be emitted again during processing to act as an aggravating factor of migration performance, and a migrated material can volatilize during processing and can possibly deteriorate plasticization efficiency and adversely affect atmospheric environment, undesirably. If the absorption rate is too long, a processing time can increase than the conventionally widely used products, for example, di(2-ethylhexyl) terephthalate, and defects of deteriorating productivity can arise.

As a method for preparing the plasticizer composition according to an embodiment of the present invention, any methods for preparing the above-described plasticizer composition, well-known in the art can be applied without specific limitation.

For example, the composition can be prepared through direct esterification reaction of citric acid or an anhydride thereof with the isomer mixture of hexyl alcohol, or through transesterification reaction of trihexyl citrate with the isomer mixture of hexyl alcohol.

The plasticizer composition according to an embodiment of the present invention is a material prepared by suitably performing the esterification reaction, and the preparation method is not specifically limited only if the above-described conditions are acceptable, particularly, if the ratio of a branched alcohol in the isomer mixture alcohol is controlled, and a specific component is included.

For example, the direct esterification reaction can be performed as following: a step of injecting citric acid or a derivative thereof and a mixture alcohol of two or more types, adding a catalyst and reacting in a nitrogen atmosphere; a step of removing an unreacted raw material; a step of neutralizing (or deactivating) the unreacted raw material and the catalyst; and a step of removing (for example, distillation under a reduced pressure) impurities and filtering. Here, in case of combining a citrate-based material with an acetyl group, a step of performing acylation reaction can be further included after removing the unreacted raw material.

The components of the isomer mixture of hexyl alcohol and the weight ratio of the components are the same as described above. The isomer mixture of alcohol can be used in a range of 200 to 900 mol%, 200 to 700 mol%, 200 to 600 mol%, 250 to 500 mol%, or 270 to 400 molt based on 100 mol% of an acid, and by controlling the amount of the alcohol, the component ratio in a final composition can be controlled.

The catalyst can be, for example, one or more selected from an acid catalyst such as sulfuric acid, hydrochloric acid, phosphoric acid, nitric acid, paratoluenesulfonic acid, methanesulfonic acid, ethanesulfonic acid, propanesulfonic acid, butanesulfonic acid, and alkyl sulfate, a metal salt such as aluminum lactate, lithium fluoride, potassium chloride, cesium chloride, calcium chloride, iron chloride, and aluminum phosphate, a metal oxide such as heteropoly acids, natural/synthetic zeolites, cation and anion exchange resins, and an organometal such as tetra alkyl titanate and the polymers thereof. In a particular embodiment, the catalyst can use tetra alkyl titanate. Preferably, as an acid catalyst having low activation temperature, paratoluenesulfonic acid, methanesulfonic acid, etc., can be suitable.

The amount used of the catalyst can be different according to the type thereof, and for example, a homogeneous catalyst can be used in an amount of 0.01 to 5 wt%, 0.01 to 3 wt%, 1 to 5 wt% or 2 to 4 wt% based on total 100 wt% of reactants, and a heterogeneous catalyst can be used in an amount of 5 to 200 wt%, 5 to 100 wt%, 20 to 200 wt%, or 20 to 150 wt% based on the total amount of reactants.

In this case, the reaction temperature can be within a range of 100 to 280°C, 100 to 250°C, or 120 to 230°C.

In another embodiment, the transesterification reaction can be reaction of a citrate, and an alcohol having a different alkyl radical from the alkyl radical of the citrate (a linear alcohol in case of a citrate combined with a branched alkyl group, and a branched alcohol in case of a citrate combined with a linear alkyl group). Here, the alkyl groups of the citrate and alcohol can be exchanged.

"Transesterification" used in the present invention means the reaction of an alcohol and an ester as shown in Reaction 1 below to interchange R" of the ester with R' of the alcohol as shown in Reaction 1 below.

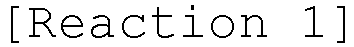

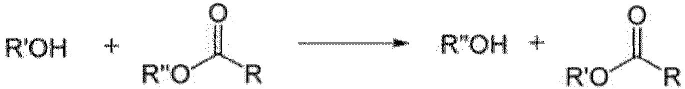

Generally, if the transesterification is carried out and if there are two types of the alkyl groups, four types of ester compositions can be produced according to four cases: a case where the alkoxide of the alcohol attacks the carbon of three ester groups (RCOOR") which are present in the ester compound; a case where the alkoxide of the alcohol attacks the carbon of two ester groups (RCOOR") which are present in the ester compound; a case where the alkoxide of the alcohol attacks the carbon of one ester group (RCOOR") which is present in the ester compound; and a unreacted case wherein no reaction is performed.

However, in the citrate included in the plasticizer composition according to the present invention, if two ester groups are exchanged or one ester group is exchanged according to the bonding position of an ester group, three types can be formed for each. Accordingly, the maximum 8 types of compounds can be mixed in a final composition. However, in the isomer mixture of hexyl alcohol according to the present invention, two types of alkyl groups are present, and the types can be more diverse.

The composition ratio of the mixture prepared through the transesterification can be controlled according to the addition amount of the alcohol. The amount added of the alcohol can be 0.1 to 200 parts by weight, particularly, 1 to 150 parts by weight, more particularly, 5 to 100 parts by weight based on 100 parts by weight of the trialkyl citrate. For reference, the determination of the component ratio in a final composition can be the amount added of the alcohol like in the direct esterification reaction.

According to an embodiment of the present invention, the transesterification can be performed at a reaction temperature of 120°C to 190°C, preferably, 135°C to 180°C, more preferably, 141°C to 179°C for 10 minutes to 10 hours, preferably, 30 minutes to 8 hours, more preferably, 1 to 6 hours. Within the temperature and time ranges, the composition ratio of a final plasticizer composition can be efficiently controlled. In this case, the reaction time can be calculated from a point when the reaction temperature is achieved after elevating the temperature of the reactants.

The transesterification can be performed under an acid catalyst or a metal catalyst, and in this case, the effects of decreasing the reaction time can be achieved.

The acid catalyst can include, for example, sulfuric acid, methanesulfonic acid or p-toluenesulfonic acid, and the metal catalyst can include, for example, an organometal catalyst, a metal oxide catalyst, a metal salt catalyst, or a metal itself.

The metal component can be, for example, any one selected from the group consisting of tin, titanium and zirconium, or a mixture of two or more thereof.

In addition, a step of removing unreacted alcohol and reaction by-products by distillation can be further included after the transesterification. The distillation can be, for example, a two-step distillation by which the alcohol and the by-products are individually separated using the difference of the boiling points. In another embodiment, the distillation can be mixture distillation. In this case, effects of relatively stable securing of an ester-based plasticizer composition in a desired composition ratio can be achieved. The mixture distillation means distillation of the unreacted alcohol and the by-products simultaneously.

According to another embodiment of the present invention, a resin composition including the plasticizer composition and a resin is provided.

The resin can use resins well-known in the art. For example, a mixture of one or more selected from the group consisting of a straight vinyl chloride polymer, a paste vinyl chloride polymer, an ethylene vinyl acetate copolymer, an ethylene polymer, a propylene polymer, polyketone, polystyrene, polyurethane, natural rubber, synthetic rubber and thermoplastic elastomer can be used, without limitation.

The plasticizer composition is included in 5 to 150 parts by weight, preferably, 5 to 130 parts by weight, or 10 to 120 parts by weight based on 100 parts by weight of the resin.

Generally, the resin using the plasticizer composition can be prepared into a resin product through a melt processing or a plastisol processing, and a resin by the melt processing and a resin from the plastisol processing can be produced differently according to each polymerization method.

For example, in case of using a vinyl chloride polymer in a melt processing, solid phase resin particles having a large average particle diameter are prepared by suspension polymerization, or the like and used, and the vinyl chloride polymer is referred to as a straight vinyl chloride polymer. In case of using a vinyl chloride polymer in a plastisol processing, a sol state resin as minute resin particles are prepared by emulsion polymerization, or the like and used, and this vinyl chloride polymer is referred to as a paste vinyl chloride resin.

In case of the straight vinyl chloride polymer, a plasticizer can be included in a range of 5 to 80 parts by weight with respect to 100 parts by weight of the polymer, and in case of the paste vinyl chloride polymer, the plasticizer can be included in a range of 40 to 120 parts by weight with respect to 100 parts by weight of the polymer.

The resin composition can further include a filler. The filler can be 0 to 300 parts by weight, preferably, 50 to 200 parts by weight, more preferably, 100 to 200 parts by weight based on 100 parts by weight of the resin.

The filler can use fillers well-known in the art and is not specifically limited. For example, the filler can be a mixture of one or more kinds selected from silica, magnesium carbonate, calcium carbonate, hard coal, talc, magnesium hydroxide, titanium dioxide, magnesium oxide, calcium hydroxide, aluminum hydroxide, aluminum silicate, magnesium silicate and barium sulfate.

In addition, the resin composition can further include other additives such as a stabilizer as necessary. Each of the other additives such as the stabilizer can be, for example, 0 to 20 parts by weight, preferably, 1 to 15 parts by weight based on 100 parts by weight of the resin.

The stabilizer can use, for example, a calcium-zinc-based (Ca-Zn-based) stabilizer such as a composite stearate of calcium-zinc or a barium-zinc-based (Ba-Zn-based) stabilizer, but is not specifically limited.

The resin composition can be applied to both a melt processing and a plastisol processing as described above, and a calendaring processing, an extrusion processing, or an injection processing can be applied to the melt processing, and a coating processing, or the like can be applied to the plastisol processing.

### Examples

Hereinafter, embodiments will be explained in detail to particularly explain the present invention. The present invention can, however, be embodied in different forms and should not be construed as limited to the embodiments set forth herein. Rather, these embodiments are provided so that this disclosure will be thorough and complete, and will fully convey the scope of the inventive concept to those skilled in the art.

### Example 1

To a reactor equipped with a stirrer, a condenser and a decanter, 396.4 g of citric acid, 797.2 g of an isomer mixture of hexyl alcohol, and 2 g of tetrabutyl titanate (TnBT) were injected, and under a nitrogen atmosphere, esterification reaction was carried out. After finishing the reaction, a catalyst and the product thus obtained were neutralized with an aqueous alkali solution, and unreacted alcohol and water were separated to finally obtain a plasticizer composition.

Here, the alcohol composition of the isomer mixture of hexyl alcohol is shown in Table 1 below.

### Examples 2 to 12

Plasticizer compositions were obtained by the same method as in Example 1 except for changing the alcohol composition of the isomer mixture of hexyl alcohol as in Table 1 below.

**[Table 1]**

| | 1-hexanol | 2-methylpenta nol | 3-methylpenta nol | 2-ethylbutan ol | Cyclopentyl methanol |
|---|---|---|---|---|---|
| Example 1 | 30 | 15 | 50 | - | 5 |
| Example 2 | 30 | 30 | 30 | - | 10 |
| Example 3 | 10 | 40 | 40 | - | 10 |
| Example 4 | 20 | 30 | 40 | - | 10 |
| Example 5 | 5 | 30 | 50 | - | 15 |
| Example 6 | 2 | 50 | 40 | - | 8 |
| Example 7 | 8 | 60 | 30 | - | 2 |
| Example 8 | 10 | 40 | 50 | - | - |
| Example 9 | 30 | 30 | 40 | - | - |
| Example 10 | - | 40 | 50 | - | 10 |
| Example 11 | 10 | - | 80 | - | 10 |
| Example 12 | 30 | - | - | 70 | - |

| | | | | | |
|---|---|---|---|---|---|
| * The amounts of the alcohols are all parts by weights. * The amounts of the components in the isomer mixture of hexyl alcohol were analyzed by gas chromatography measurement using a gas chromatography equipment of Agilent Co. (product name: Agilent 7890 GC, column: HP-5, carrier gas: helium (flow rate of 2.4 ml/min), detector: F.I.D., injection volume: 1 µl, initial value: 70°C/4.2 min, end value: 280°C/7.8 min, program rate: 15°C/min). | | | | | |

### Comparative Example 1

Diisononyl phthalate (DINP), a product of LG Chem, was used as a plasticizer composition.

### Comparative Example 2

Di(2-ethylhexyl) terephthalate (DEHTP, LGflex GL300), a product of LG Chem, was used as a plasticizer composition.

### Comparative Example 3

A plasticizer composition was obtained by the same method as in Example 1 except for using n-butanol instead of the isomer mixture of hexyl alcohol in Example 1.

### Comparative Example 4

A plasticizer composition was obtained by the same method as in Example 1 except for using n-pentanol instead of the isomer mixture of hexyl alcohol in Example 1.

### Comparative Example 5

A plasticizer composition was obtained by the same method as in Example 1 except for using 2-methylbutanol instead of the isomer mixture of hexyl alcohol in Example 1.

### Comparative Example 6

A plasticizer composition was obtained by the same method as in Example 1 except for using n-heptanol instead of the isomer mixture of hexyl alcohol in Example 1.

### Comparative Example 7

A plasticizer composition was obtained by the same method as in Example 1 except for using isoheptanol (2-methylhexanol) instead of the isomer mixture of hexyl alcohol in Example 1.

### Comparative Example 8

A plasticizer composition was obtained by the same method as in Example 1 except for using 2-ethylhexanol instead of the isomer mixture of hexyl alcohol in Example 1.

### Comparative Example 9

A plasticizer composition was obtained by the same method as in Example 1 except for using isononanol instead of the isomer mixture of hexyl alcohol in Example 1.

### Experimental Example 1: Sheet performance evaluation

By using the plasticizers of the Examples and the Comparative Examples, specimens were manufactured according to ASTM D638 and the prescription and manufacturing conditions below.
**(1) Formulation:** 100 parts by weight of a straight vinyl chloride polymer (LS100S), 40 parts by weight of a plasticizer and 3 parts by weight of a stabilizer (BZ-153T)
**(2) Mixing:** mixing at 98°C in 700 rpm
**(3) Manufacture of specimen:** 1T and 3T sheets were manufactured by processing at 160°C for 4 minutes by a roll mill, and at 180°C for 2.5 minutes (low pressure) and 2 minutes (high pressure) by a press
**(4) Test items**
   1) Hardness: Shore hardness (Shore "A" and "D") at 25°C was measured using a 3T specimen for 10 seconds using ASTM D2240. The plasticization efficiency was assessed excellent if the value was small.
   2) Tensile strength: By an ASTM D638 method, a specimen was drawn in a cross-head speed of 200 mm/min using a test apparatus of U.T.M (manufacturer: Instron, model name: 4466), and a point where the 1T specimen was cut was measured. The tensile strength was calculated as follows. Tensile strength (kgf/cm2) = load value (kgf)/thickness (cm) x width (cm)
   3) Elongation rate measurement: By an ASTM D638 method, a specimen was drawn in a cross-head speed of 200 mm/min using a test apparatus of U.T.M, and a point where the 1T specimen was cut was measured. The elongation rate was calculated as follows. Elongation rate (%) = length after elongation/initial length x 100
   4) Migration loss measurement: According to KSM-3156, a specimen with a thickness of 2 mm or more was obtained, glass plates were attached onto both sides of the specimen, and a load of 1 kgf/cm² was applied. The specimen was stood in a hot air circulation type oven (80°C) for 72 hours and then taken out and cooled at room temperature for 4 hours. Then, the weights of the specimen from which glass plates attached onto both sides thereof were removed, were measured before and after standing in the oven, and the migration loss was calculated as follows. Migration loss (%) = {(initial weight of specimen at room temperature - weight of specimen after standing in oven)/initial weight of specimen at room temperature} x 100
      The value derived from the equation above was indexed and shown based on the migration loss value of DEHTP of Comparative Example 2, and the lower, the better.
   5) Volatile loss measurement: The specimen manufactured was processed at 80°C for 72 hours, and the weight of the specimen was measured. Volatile loss (wt%) = weight of initial specimen - (weight of specimen after processing at 80°C for 72 hours)/weight of initial specimen x 100
   6) Stress test (stress resistance): A specimen with a thickness of 2 mm in a bent state was stood at 23°C for 168 hours, and the degree of migration (degree of oozing) was observed. The results were recorded as numerical values, and excellent properties were shown if the quantity was closer to 0.
   7) Absorption rate measurement
      Absorption rate was evaluated by measuring the time consumed for mixing a resin and an ester compound until stabilizing the torque of a mixer by using a planatary mixer (Brabender, P600) in conditions of 77°C and 60 rpm.
   8) Light resistance measurement
      By a method of ASTM 4329-13, the specimen was put on QUV (QUV/se, Q-LAB) and exposed to UV (340 nm) for a certain time, and color change was calculated using Reflectometer (Tintometer, LoviBond).
**(5) Evaluation results**

The evaluation results on the test items are listed in Table 2 and Table 3 below.

**[Table 2]**

| | Hardness (Shore A) | Hardness (Shore D) | Tensile strength (kgf/cm²) | Elongation rate (%) |
|---|---|---|---|---|
| Example 1 | 88.2 | 42.1 | 220.9 | 334.0 |
| Example 2 | 88.1 | 42.0 | 223.2 | 331.8 |
| Example 3 | 88.1 | 42.0 | 224.6 | 335.4 |
| Example 4 | 88.0 | 42.1 | 225.0 | 332.8 |
| Example 5 | 87.8 | 42.0 | 224.3 | 337.5 |
| Example 6 | 88.2 | 42.2 | 221.3 | 329.8 |
| Example 7 | 88.0 | 42.1 | 225.3 | 335.2 |
| Example 8 | 88.2 | 42.3 | 227.1 | 332.5 |
| Example 9 | 88.0 | 42.0 | 228.4 | 336.1 |
| Example 10 | 88.1 | 42.0 | 227.3 | 332.6 |
| Example 11 | 87.9 | 41.8 | 225.7 | 332.6 |
| Example 12 | 88.0 | 42.2 | 218.9 | 337.8 |
| Comparative Example 1 | 91.3 | 47.1 | 229.0 | 319.0 |
| Comparative Example 2 | 92.4 | 47.9 | 246.3 | 344.4 |
| Comparative Example 3 | 84.6 | 39.0 | 205.5 | 286.4 |
| Comparative Example 4 | 86.6 | 40.7 | 205.1 | 298.1 |
| Comparative Example 5 | 88.0 | 42.1 | 206.0 | 289.7 |
| Comparative Example 6 | 92.3 | 45.1 | 227.3 | 345.6 |
| Comparative Example 7 | 92.5 | 45.4 | 228.2 | 341.2 |
| Comparative Example 8 | 94.1 | 48.7 | 229.5 | 354.1 |
| Comparative Example 9 | 97.2 | 53.4 | 237.4 | 365.0 |

**[Table 3]**

| | Migration loss (%) | Volatile loss (%) | Stress migration | Absorption rate | Light resistance |
|---|---|---|---|---|---|
| Example 1 | 0.74 | 0.58 | 0 | 5'10" | 0.61 |
| Example 2 | 0.66 | 0.70 | 0 | 5'05" | 0.52 |
| Example 3 | 0.90 | 0.62 | 0 | 5'05" | 0.62 |
| Example 4 | 0.85 | 0.66 | 0 | 5'10" | 0.55 |
| Example 5 | 0.74 | 0.65 | 0 | 5'00" | 0.60 |
| Example 6 | 0.87 | 0.65 | 0 | 5'15" | 0.74 |
| Example 7 | 0.84 | 0.68 | 0 | 5'15" | 0.80 |
| Example 8 | 0.90 | 0.70 | 0 | 5'20" | 0.92 |
| Example 9 | 0.74 | 0.58 | 0 | 4'55" | 0.68 |
| Example 10 | 0.80 | 0.61 | 0 | 5'00" | 0.74 |
| Example 11 | 0.68 | 0.72 | 0 | 4'50" | 0.88 |
| Example 12 | 0.95 | 0.69 | 0 | 5'12" | 0.80 |
| Comparative Example 1 | 2.44 | 0.72 | 0.5 | 5'55" | 1.01 |
| Comparative Example 2 | 5.64 | 0.79 | 3.0 | 6'58" | 2.84 |
| Comparative Example 3 | 0.45 | 4.51 | 0 | 2'30" | 0.86 |
| Comparative Example 4 | 0.84 | 2.03 | 0 | 3'54" | 0.77 |
| Comparative Example 5 | 1.20 | 2.65 | 0 | 5'28" | 0.99 |
| Comparative Example 6 | 2.30 | 0.57 | 1.5 | 6'56" | 0.98 |
| Comparative Example 7 | 2.54 | 0.75 | 2.0 | 8'20" | 1.02 |
| Comparative Example 8 | 2.89 | 0.54 | 2.5 | 8'16" | 1.00 |
| Comparative Example 9 | 3.45 | 0.56 | 3.0 | 9'45" | 1.11 |

Referring to the results of Table 2 and 3, it could be confirmed that cases where the plasticizers of Examples 1 to 12 were applied, mostly showed better physical properties and excellent balance between physical properties, particularly, excellent effects of tensile strength, volatile loss, migration loss and light resistance than cases where the plasticizers of Comparative Examples 1 to 9 were applied. Further, the absorption rate was not too fast within about 5 minutes, and there were no worries on discharge. With regard to the absorption rate of not exceeding 7 minutes, it could be confirmed that processability was also excellent.

Particularly, in contrast to Comparative Examples 1 and 2 in which commercial products of the conventional plasticizer were applied, great improvement was confirmed in view of migration loss and volatile loss, absorption rate was also improved, and the improvement of processability could be also expected. Particularly, in contrast to Comparative Example 2 which is the conventional eco-friendly product, it could be confirmed that stress resistance and light resistance were also very excellent.

In addition, in case of applying an alcohol having a carbon number of 4 as in Comparative Example 3, the absorption rate was 2 minutes and very fast, but the plasticizer was absorbed during mixing in a short time, and then the phenomenon of discharging again was observed, and thus, very inferior processability could be expected. Mechanical properties and volatile loss were confirmed to levels not satisfying the consumer's basic requirement conditions. In Comparative Examples 4 and 5, an alcohol with a carbon number of 5 was applied, and like the case of carbon number of 4, it was confirmed that tensile strength and elongation rate as mechanical properties were very poor, and volatile loss was also significantly poor.

Also, in Comparative Examples 6 and 7 in which a carbon number of 7 was applied, it was confirmed that the plasticization efficiency was extremely poor, migration was inferior, stress resistance was inferior, and at the same time absorption rate was markedly slow. These phenomena were confirmed further inferior in Comparative Example 8 in which a carbon number of 8 was applied and Comparative Example 9 in which a carbon number of 9 was applied.

Through this, it could be found that if the plasticizers of the Examples are applied, the balance of all physical properties is appropriate, and a plasticizer can be provided to a level meeting product satisfaction standard without degrading any one of the physical properties. However, in case of applying a plasticizer not included in the present invention, though some physical properties could be evaluated excellent, two or more extremely poor physical properties are present, thereby failing to meet the product satisfaction standard.

## Claims

1. A citrate-based plasticizer composition comprising a citrate-based composition comprising one or more citrates of the following Formula 1, wherein:
an alkyl group of the citrate is derived from an isomer mixture of hexyl alcohol having a degree of branching, measured as disclosed in the specification, of 2.0 or less, and
the isomer mixture of hexyl alcohol comprises two or more selected from the group consisting of 1-hexanol, 1-methylpentanol, 2-methylpentanol, 3-methylpentanol, 4-methylpentanol, 1,1-dimethylbutanol, 1,2-dimethylbutanol, 1,3-dimethylbutanol, 2,2-dimethylbutanol, 2,3-dimethylbutanol, 3,3-dimethylbutanol, 1-ethylbutanol, 2-ethylbutanol, 3-ethylbutanol and cyclopentylmethanol: 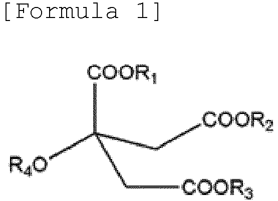 in Formula 1,
R₁ to R₃ are each independently an n-hexyl group, a branched hexyl group or a cyclopentylmethyl group, and
R₄ is hydrogen or an acetyl group.

2. The plasticizer composition of claim 1, wherein the isomer mixture of hexyl alcohol has the degree of branching of 1.5 or less.

3. The plasticizer composition of claim 1, wherein the isomer mixture of hexyl alcohol comprises 1-hexanol, 2-methylpentanol and 3-methylpentanol.

4. The plasticizer composition of claim 1, wherein the isomer mixture of hexyl alcohol comprises 40 parts by weight or more of a branched alcohol with respect to 100 parts by weight of the isomer mixture.

5. The plasticizer composition of claim 1, wherein the isomer mixture of hexyl alcohol comprises 50 to 95 parts by weight of a branched alcohol with respect to 100 parts by weight of the isomer mixture.

6. The plasticizer composition of claim 1, wherein the isomer mixture of hexyl alcohol comprises 40 parts by weight or less of the 1-hexanol with respect to 100 parts by weight of the isomer mixture.

7. The plasticizer composition of claim 1, wherein the isomer mixture of hexyl alcohol comprises the 1-hexanol, the 2-methylpentanol, the 3-methylpentanol and the cyclopentylmethanol.

8. The plasticizer composition of claim 7, wherein the isomer mixture of hexyl alcohol comprises 20 parts by weight or less of the cyclomethylpentanol with respect to 100 parts by weight of the isomer mixture.

9. A resin composition, comprising:
100 parts by weight of a resin; and 5 to 150 parts by weight of the plasticizer composition of claim 1.

10. The resin composition of claim 9, wherein the resin is one or more selected from the group consisting of a straight vinyl chloride polymer, a paste vinyl chloride polymer, an ethylene vinyl acetate copolymer, an ethylene polymer, a propylene polymer, polyketone, polystyrene, polyurethane, natural rubber and synthetic rubber.

## Patentansprüche

1. Weichmacherzusammensetzung auf Citratbasis, umfassend eine Zusammensetzung auf Citratbasis, umfassend ein oder mehrere Citrate der folgenden Formel 1, wobei:
eine Alkylgruppe des Citrats von einem Isomerengemisch von Hexylalkohol mit einem Verzweigungsgrad, gemessen wie in der Beschreibung offenbart, von 2,0 oder weniger abgeleitet ist, und
das Isomerengemisch von Hexylalkohol zwei oder mehr umfasst, ausgewählt aus der Gruppe, bestehend aus 1-Hexanol, 1-Methylpentanol, 2-Methylpentanol, 3-Methylpentanol, 4-Methylpentanol, 1,1-Dimethylbutanol, 1,2-Dimethylbutanol, 1,3-Dimethylbutanol, 2,2-Dimethylbutanol, 2,3-Dimethylbutanol, 3,3-Dimethylbutanol, 1-Ethylbutanol, 2-Ethylbutanol, 3-Ethylbutanol und Cyclopentylmethanol: 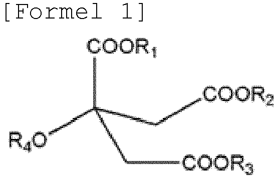 wobei in Formel 1
R₁ bis R₃ jeweils unabhängig eine n-Hexylgruppe, eine verzweigte Hexylgruppe oder eine Cyclopentylmethylgruppe sind, und
R₄ Wasserstoff oder eine Acetylgruppe ist.

2. Weichmacherzusammensetzung nach Anspruch 1, wobei das Isomerengemisch von Hexylalkohol einen Verzweigungsgrad von 1,5 oder weniger aufweist.

3. Weichmacherzusammensetzung nach Anspruch 1, wobei das Isomerengemisch von Hexylalkohol 1-Hexanol, 2-Methylpentanol und 3-Methylpentanol umfasst.

4. Weichmacherzusammensetzung nach Anspruch 1, wobei das Isomerengemisch von Hexylalkohol 40 Gewichtsteile oder mehr eines verzweigten Alkohols in Bezug auf 100 Gewichtsteile des Isomerengemischs umfasst.

5. Weichmacherzusammensetzung nach Anspruch 1, wobei das Isomerengemisch von Hexylalkohol 50 bis 95 Gewichtsteile eines verzweigten Alkohols in Bezug auf 100 Gewichtsteile des Isomerengemischs umfasst.

6. Weichmacherzusammensetzung nach Anspruch 1, wobei das Isomerengemisch von Hexylalkohol 40 Gewichtsteile oder weniger des 1-Hexanols in Bezug auf 100 Gewichtsteile des Isomerengemischs umfasst.

7. Weichmacherzusammensetzung nach Anspruch 1, wobei das Isomerengemisch von Hexylalkohol das 1-Hexanol, das 2-Methylpentanol, das 3-Methylpentanol und das Cyclopentylmethanol umfasst.

8. Weichmacherzusammensetzung nach Anspruch 7, wobei das Isomerengemisch von Hexylalkohol 20 Gewichtsteile oder weniger des Cyclomethylpentanols in Bezug auf 100 Gewichtsteile des Isomerengemischs umfasst.

9. Harzzusammensetzung, umfassend:
100 Gewichtsteile eines Harzes; und 5 bis 150 Gewichtsteile der Weichmacherzusammensetzung nach Anspruch 1.

10. Harzzusammensetzung nach Anspruch 9, wobei das Harz eines oder mehrere ist, ausgewählt aus der Gruppe, bestehend aus einem unverzweigten Vinylchloridpolymer, einem Pastenvinylchloridpolymer, einem Ethylenvinylacetatcopolymer, einem Ethylenpolymer, einem Propylenpolymer, Polyketon, Polystyrol, Polyurethan, Naturkautschuk und Synthesekautschuk.

## Revendications

1. Composition de plastifiant à base de citrate comprenant une composition à base de citrate comprenant un ou plusieurs citrates de la Formule 1 ci-après, dans laquelle :
un groupe alkyle du citrate est dérivé d'un mélange d'isomères d'alcool hexyle ayant un degré de ramification, mesuré comme décrit dans la spécification, égal ou inférieur à 2,0, et
le mélange d'isomères d'alcool hexyle comprend deux ou plusieurs éléments sélectionnés dans le groupe constitué de 1-hexanol, 1-méthylpentanol, 2-méthylpentanol, 3-méthylpentanol, 4-méthylpentanol, 1,1-diméthylbutanol, 1,2-diméthylbutanol, 1,3-diméthylbutanol, 2,2-diméthylbutanol, 2,3-diméthylbutanol, 3,3-diméthylbutanol, 1-éthylbutanol, 2-éthylbutanol, 3-éthylbutanol et cyclopentylméthanol : 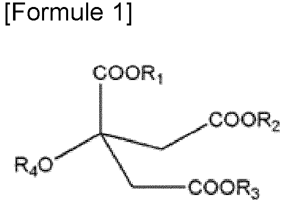 dans la Formule 1,
R₁ à R₃ sont chacun indépendamment un groupe n-hexyle, un groupe hexyle ramifié ou un groupe cyclopentyle méthyle, et
R₄ est un hydrogène ou un groupe acétyle.

2. Composition de plastifiant selon la revendication 1, dans laquelle le mélange d'isomères d'alcool hexyle a le degré de ramification égal ou inférieur à 1,5.

3. Composition de plastifiant selon la revendication 1, dans laquelle le mélange d'isomères d'alcool hexyle comprend 1-hexanol, 2-méthylpentanol et 3-méthylpentanol.

4. Composition de plastifiant selon la revendication 1, dans laquelle le mélange d'isomères d'alcool hexyle comprend 40 parties en poids ou plus d'un alcool ramifié pour 100 parties en poids du mélange d'isomères.

5. Composition de plastifiant selon la revendication 1, dans laquelle le mélange d'isomères d'alcool hexyle comprend 50 à 95 parties en poids d'un alcool ramifié pour 100 parties en poids du mélange d'isomères.

6. Composition de plastifiant selon la revendication 1, dans laquelle le mélange d'isomères d'alcool hexyle comprend 40 parties en poids ou moins du 1-hexanol pour 100 parties en poids du mélange d'isomères.

7. Composition de plastifiant selon la revendication 1, dans laquelle le mélange d'isomères d'alcool hexyle comprend le 1-hexanol, le 2-méthylpentanol, le 3-méthylpentanol et le cyclopentylméthanol.

8. Composition de plastifiant selon la revendication 7, dans laquelle le mélange d'isomères d'alcool hexyle comprend 20 parties en poids ou moins du cyclométhylpentanol pour 100 parties en poids du mélange d'isomères.

9. Composition de résine, comprenant :
100 parties en poids d'une résine; et 5 à 150 parties en poids de la composition de plastifiant selon la revendication 1.

10. Composition de résine selon la revendication 9, dans laquelle la résine est un ou plusieurs éléments sélectionnés dans le groupe constitué d'un polymère de chlorure de vinyle droit, un polymère de chlorure de vinyle en pâte, un copolymère d'éthylène-acétate de vinyle, un polymère d'éthylène, un polymère de propylène, une polycétone, un polystyrène, un polyuréthane, un acide polylactique, un caoutchouc naturel et un caoutchouc synthétique.
